# EUROPEAN PATENT APPLICATION

(11) **EP 1 602 954 A1**
(43) Date of publication of application: **07.12.2005**
(21) Application number: 04718419.7
(22) Date of filing: 08.03.2004
(51) Int. Cl.: G02B 6/42

(54) **OPTICAL MODULE AND OPTICAL TRANSCEIVER**

(30) Priority: 07.03.2003 JP 2003061471
(71) Applicant: MATSUSHITA ELECTRIC INDUSTRIAL CO., LTD., Kadoma-shi, Osaka 571-8501 (JP)
(72) Inventor: SATO, Yoshiyasu, Yokohama-shi, Kanagawa 221-0861 (JP); TOUGOU, Hitomaro, Yokohama-shi, Kanagawa 226-0014 (JP)
(74) Representative: Leeming, John Gerard
(86) International application number: PCT/JP2004/002970
(87) International publication number: WO 2004/079422

(57) **Abstract**

A technique to prevent return light by an inexpensive construction in an optical module is disclosed. According to this technique, at the end face of a cylindrical metal part made of SUS 303, a hole to expose the end of an optical fiber wire 2 is formed, and then a hole to let through an optical fiber 1 is made to fabricate a cylindrical metal ferrule 3. Further, in a cylindrical metal part made of SUS 304, a hole to let through the optical fiber and the metal ferrule 3 is formed to fabricate a metal ferrule 4. The metal ferrule 3 is inserted and jointed into a cavity section of the metal ferrule 4 by press fitting or the like. Further, the optical fiber is inserted in the holes of the metal ferrules 3 and 4 so that the optical fiber wire is exposed from an end face of the metal ferrule 3. The gap between the optical fiber and the metal ferrules 3, 4 is jointed by an adhesive 17.

## Description

### TECHNICAL FIELD

The present invention relates to an optical module, in which an end face of an optical fiber is diagonally cut in relation to the radial direction in order to prevent transmitted light from being reflected by the end face of the optical fiber and being returned to a light emitting device, which causes unstable oscillation of the light emitting device; and an optical transmitter-receiver using such an optical module for optical transmitting and receiving.

### BACKGROUND ART

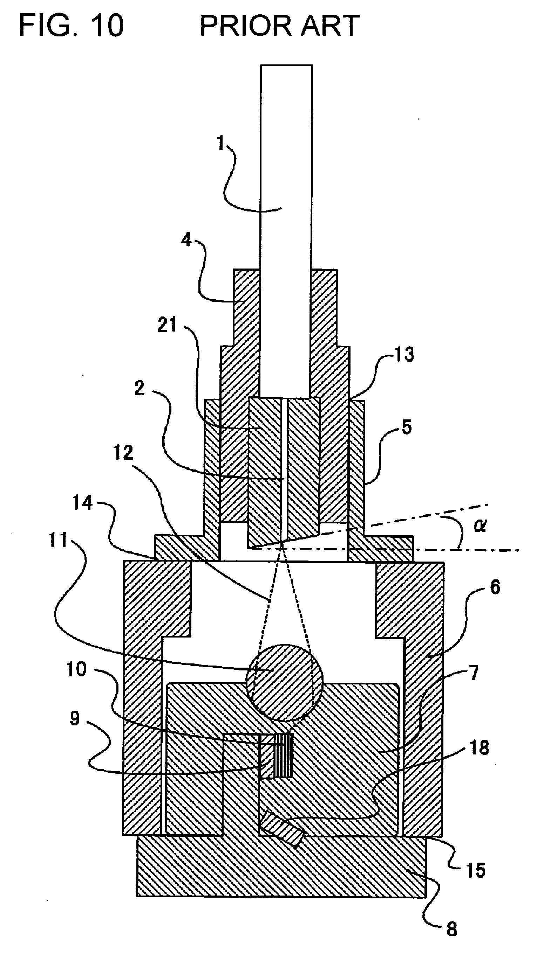

FIG. 10 shows an optical transmitter module as a conventional example (for example, refer to Patent document 1). At an end of an optical fiber 1, a coating is removed so that an optical fiber wire 2 is exposed, the periphery of the optical fiber wire 2 of the end is supported by a ferrule made of zirconia (hereinafter referred to as zirconia ferrule) 21, and the periphery of the zirconia ferrule 21 and the optical fiber 1 is supported by a ferrule 4 made of a metal (hereinafter referred to as metal ferrule) . Further, in order to prevent the foregoing return light, the end face of the optical fiber wire 2 and the zirconia ferrule 21 is polished diagonally (angle α of the figure), and then the periphery of the metal ferrule 4 is supported by a sleeve 5.
Patent document 1: Japanese Unexamined Patent Application Publication No. H05-343709 (FIG. 7(b) and paragraphs 0035 to 0036)

An LD (laser diode) 10, the semiconductor light emitting device opposed to the foregoing end face is supported by a TO-CAN type stem for LD 8 through a heat sink 9, and is sealed by a transparent TO-CAN type cap for LD 7. The cap 7 is provided with a lens 11. Further, the stem 8 is provided with a mirror 18, which diagonally reflects backlight of the LD 10 and prevents return light. The stem 8 is jointed to a flange 6 in the shape surrounding the optical lens 11 (15 of the figure), and the flange 6 is jointed to the sleeve 5 (14 of the figure).

However, in the foregoing conventional example, the end face of the zirconia ferrule 21 is diagonally polished together with the optical fiber wire 2. Since the zirconia itself has high hardness, there is a problem that a special polishing tool is necessary for polishing, and many man hours are demanded for such polishing. Further, in such a structure, zirconia costing high material cost is always necessary. Therefore, it is difficult to realize cost reduction, which is demanded in a low-cost access optical module.

### DISCLOSURE OF THE INVENTION

In order to solve the problems of the foregoing conventional example, it is an object of the present invention to provide an optical module capable of preventing return light in an inexpensive construction and an optical transmitter-receiver using such an optical module for optical transmitting and receiving.

In order to attain the foregoing object, according to the invention of claim 1, an optical module includes:
an optical fiber, in which an end face thereof is diagonally formed in relation to the optical axis and;
a ferrule supporting the optical fiber so that the end face of the optical fiber protrudes.

By the foregoing construction, return light can be prevented. Further, since it is not necessary to polish the ferrule, man hours are reduced, and a lower-cost optical transmitter and receiver module can be provided. Further, since there is no step of polishing the ferrule, the length of ferrule can be shortened, and therefore downsizing becomes enabled.

According to the invention of claim 2, in the optical module according to claim 1, the optical fiber and the ferrule are jointed by an adhesive, and a core of the optical fiber is exposed at the end face of the optical fiber.

By this construction, the transmitted light is condensed by an optical lens, and then coupled by a power necessary for communicating with the optical fiber. Therefore, good optical communication becomes enabled.

According to the invention of claim 3, a ferrule supporting an optical fiber so that an end of the optical fiber protrudes and the optical fiber are jointed by an adhesive having the same refractive index as of a core of the optical fiber, and an end of the core of the optical fiber is coated with the adhesive.

By this construction, even if the adhesive adheres to an end face of the optical fiber wire, signal light emitted from a light emitting device is not scattered by the adhesive. Therefore, good optical communication becomes enabled. Further, in view of manufacturing, it is not necessary to control whether the adhesive adheres to the core end of the optical fiber or not. Therefore, manufacturing characteristics are improved.

According to the invention of claim 4, in the optical module according to claim 1, a length of the optical fiber exposed from the ferrule is in the range from once to fivefold a diameter of the optical fiber.

By this construction, resistance to temperature change and impact becomes increased, and good optical communication becomes enabled.

According to the invention of claim 5, in the optical module according to claim 1 or claim 3, a concave section is formed at a fiber holding section of the ferrule, in which the end of the optical fiber protrudes, and a depth of the concave section is larger than a height, a protruding amount of the end of the fiber.

By this construction, the end of the optical fiber is protected, handling easiness is improved, and productivity is improved.

According to the invention of claim 6, in the optical module according to claim 5, a light emitting device is provided, and the height, the protruding amount of the protruding section of the optical fiber is made higher so that an end face of the ferrule is not illuminated with emitted signal light of the light emitting device entering the optical fiber.

By this construction, coupling efficiency between the transmitted light and the optical fiber is improved, and good optical communication becomes enabled.

According to the invention of claim 7, in the optical module according to claim 1 or claim 3, the ferrule is composed of a first ferrule supporting at least a wire of the optical fiber and a second ferrule supporting the first ferrule and the optical fiber, the first ferrule is formed from SUS 303, and the second ferrule is formed from SUS 304.

By this construction, expensive zirconia, which has been always demanded does not have to be used. Therefore, a low-cost and reliable optical module can be provided.

According to the invention of claim 8, in the optical module according to claim 1 or claim 3, a groove section capable of containing an adhesive is provided on a joint face inside the ferrule opposed to a coating of the optical fiber.

By this construction, joint force between the fiber and the ferrule by the adhesive can be improved without using zirconia.

The invention of claim 9 is an optical transmitter-receiver using the optical module according to any one of claims 1 to 8 for optical transmitting and receiving.

By this construction, an optical transmitter-receiver having advantages shown in the foregoing respective claims can be provided.

### BRIEF DESCRIPTION OF THE DRAWINGS

FIG. 1 is a schematic constructional view showing an optical module of a first embodiment of the present invention;
FIG. 2 is an enlarged view of a ferrule section of FIG. 1;
FIG. 3 is a schematic constructional view showing an optical module of a second embodiment of the present invention;
FIG. 4 is a schematic constructional view showing an optical module of a third embodiment of the present invention;
FIG. 5 is a schematic constructional view showing an optical module of a fourth embodiment of the present invention;
FIG. 6 is a schematic constructional view showing an optical module of a fifth embodiment of the present invention;
FIG. 7 is a schematic constructional view showing an optical module of a sixth embodiment of the present invention;
FIG. 8 is a schematic constructional view showing an optical module of a seventh embodiment of the present invention;
FIG. 9 is a schematic constructional view showing an optical module of an eighth embodiment of the present invention; and
FIG. 10 is a schematic constructional view showing a conventional optical module.

### BEST MODE FOR CARRYING OUT THE INVENTION

### <First embodiment>

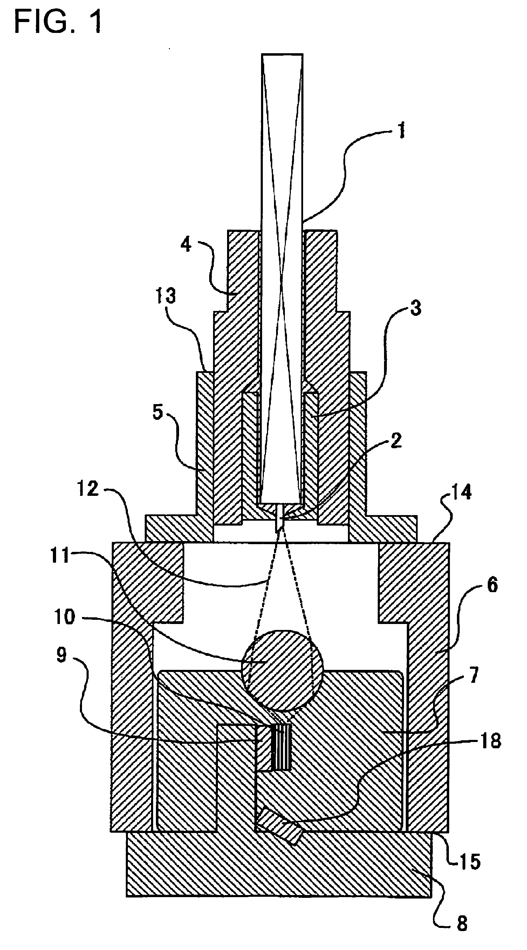

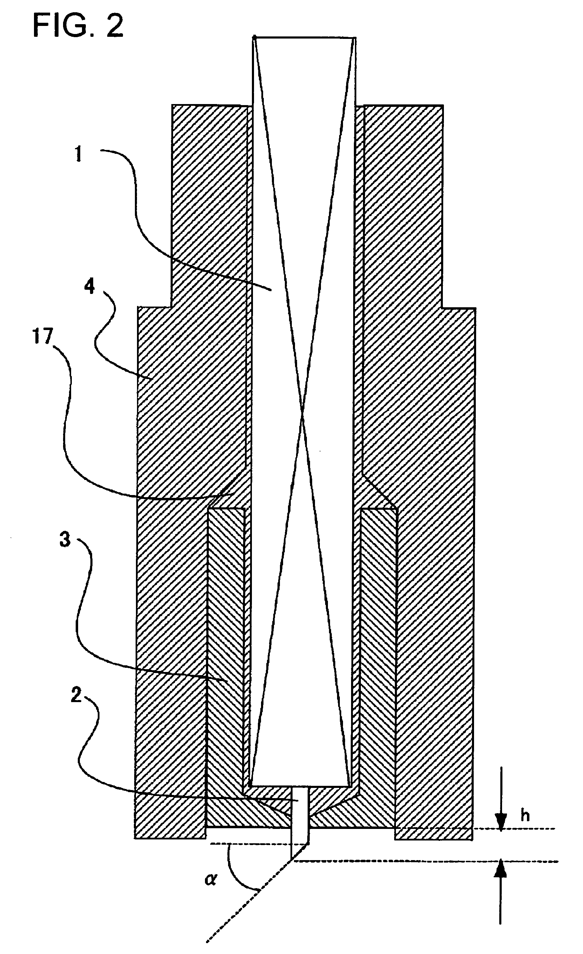

FIG. 1 is a schematic constructional view showing an optical module in a first embodiment of the present invention. "Optical module" in the present invention includes an optical transmitter module, an optical receiver module, and an optical transmitter and receiver module, which perform optical transmitting and/or optical receiving. FIG. 2 shows an enlarged view of a ferrule section of FIG. 1. In FIG. 1 and FIG. 2, the ferrule section is composed of an optical fiber 1 provided with a coating section, an optical fiber wire 2, in which the coating section is removed at the end of the optical fiber 1, a metal ferrule 3 made of SUS 303 (hereinafter simply referred to as ferrule), and a metal ferrule 4 made of SUS 304.

The structure of the ferrule section will be hereinafter described. As shown in FIG. 1 and FIG. 2, first, the coating is removed so that the optical fiber wire 2 is exposed at the end of the optical fiber 1, and the end face of the optical fiber wire 2 is diagonally cut. Further, at the end face of the cylindrical metal part of SUS 303, a 0.127+0.002 mm hole is formed in order to expose the end of the optical fiber wire 2 having a diameter of 0.127 mm. After that, an about 1.1 mmϕ hole to let through the 0. 9 mmϕ optical fiber 1 is made. Consequently, the cylindrical metal ferrule 3 is fabricated.

Further, in the cylindrical metal part made of SUS 304, an about 1.1 mmϕ hole to let through the 0. 9 mmϕ optical fiber 1 and a hole to let through the metal ferrule 3 are formed to fabricate the metal ferrule 4. Then, the metal ferrule 3 is inserted and joined into a cavity section of the metal ferrule 4 by press fitting or the like. The optical fiber 1 is inserted in the holes of the metal ferrules 3 and 4 so that the optical fiber wire 2 is exposed from the end face of the metal ferrule 3. The gap between the optical fiber 1 and the metal ferrules 3, 4 is jointed by an adhesive 17. The length of ferrule is about 3 mm to 10 mm. The structure of the light emitting device side is the same as of the conventional example, and therefore descriptions thereof are omitted.

The center cores of the ferrules 3 and 4 are three-dimensionally adjusted so that signal light emitted from an LD 10 is coupled with the optical fiber wire 2 at desired coupling efficiency. After that, a sleeve 5 and a flange 6 are jointed by using a YAG welding equipment. After the center cores are adjusted, signal light 12 emitted from the LD 10 is condensed by an optical lens 11, and then introduced to the end face of the optical fiber wire 2. The end face of the optical fiber wire 2 is diagonally cut at an angle of α. Therefore, the signal light 12 emitted from the LD 10 is not reflected and coupled with the optical fiber wire 2.

A join between the ferrule 4 and the sleeve 5 is indicated by symbol 13. A join between the sleeve 5 and the flange 6 is indicated by symbol 14. A join between the flange 6 and a stem 8 is indicated by symbol 15.

Here, when a protruding amount "h" of the optical fiber wire 2 is shorter than once a diameter of the optical fiber wire 2, a phenomenon that the adhesive 17 used for jointing the optical fiber 1 to the metal section holding the optical fiber 1 adheres to a core section of the optical fiber wire 2 occurs frequently. Meanwhile, when the protruding amount "h" is longer than fivefold a diameter of the optical fiber wire 2, a phenomenon that the movable amount of the core position of the end of the optical fiber wire 2 becomes large due to temperature change, and lowering of coupling efficiency between the LD 10 and the optical fiber wire 2 occurs. In order to avoid such phenomenon, adjustment is made so that the protruding amount "h" is in the range from once to fivefold a diameter of the optical fiber wire 2. Thereby, resistance to temperature change and impact becomes increased, and good optical transmitting and receiving becomes enabled.

### <Second embodiment>

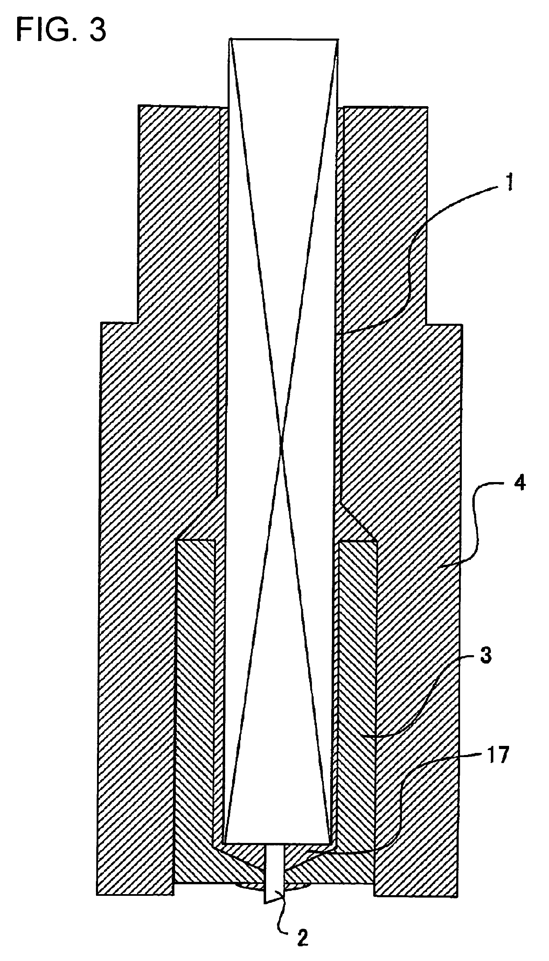

As shown in FIG. 3, regarding the adhesive 17 used for jointing the optical fiber 1, the optical fiber wire 2 to the metal ferrules 3, 4 holding the optical fiber 1, the optical fiber wire 2, by adjusting the coating amount, the coating method, and the curing temperature of the adhesive 17, the adhesive 17 is prevented from adhering to the end face of the optical fiber wire 2. Thereby, the signal light emitted from the LD 10 is condensed by the optical lens 11, and then coupled by a power necessary for communicating with the optical fiber 1. Therefore, good optical transmitting and receiving becomes enabled.

### <Third embodiment>

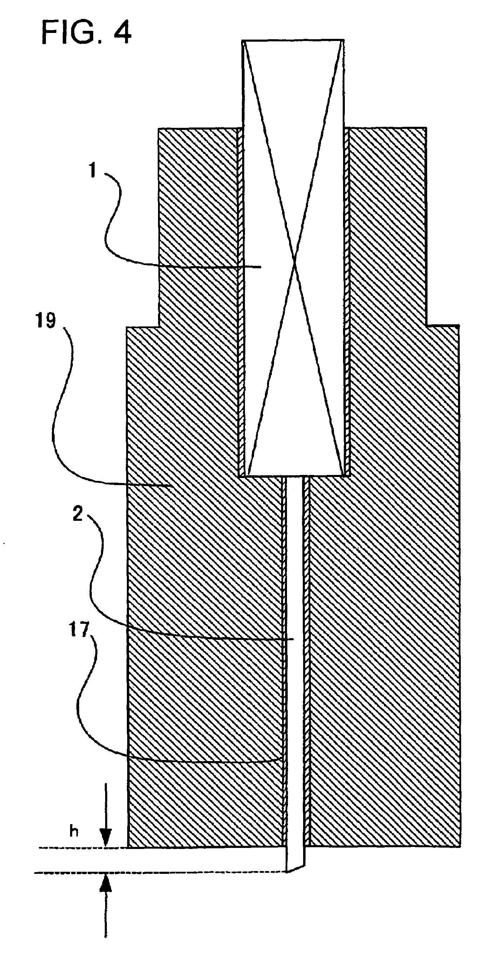

As shown in FIG. 4, a hole having a diameter of about 0.126 mm for the optical fiber wire 2 was formed in the center section of a cylindrical metal part made of, for example, Ni. After that, an about 1.1 mmϕ hole to let through the 0.9 mmϕ optical fiber 1 is made to form a cylindrical ferrule 19. In electroforming method, the diameter and the tolerance of the hole at the center section are determined by the diameter and the tolerance of a piano wire being let through therein. The optical fiber wire 2 is let through the hole and exposed from the end face of the ferrule 19. The ferrule 19, and the optical fiber wire 2, the optical fiber 1 are jointed by the adhesive 17.

### <Fourth embodiment>

Further, it becomes possible to obtain good optical transmitting and receiving by using the adhesive 17 having the same refractive index as that in the air, since in this case, even if the adhesive 17 adheres to the end face of the optical fiber wire 2, the signal light emitted from the LD 10 is not scattered or reflected on the layer and the surface of the adhesive 17.

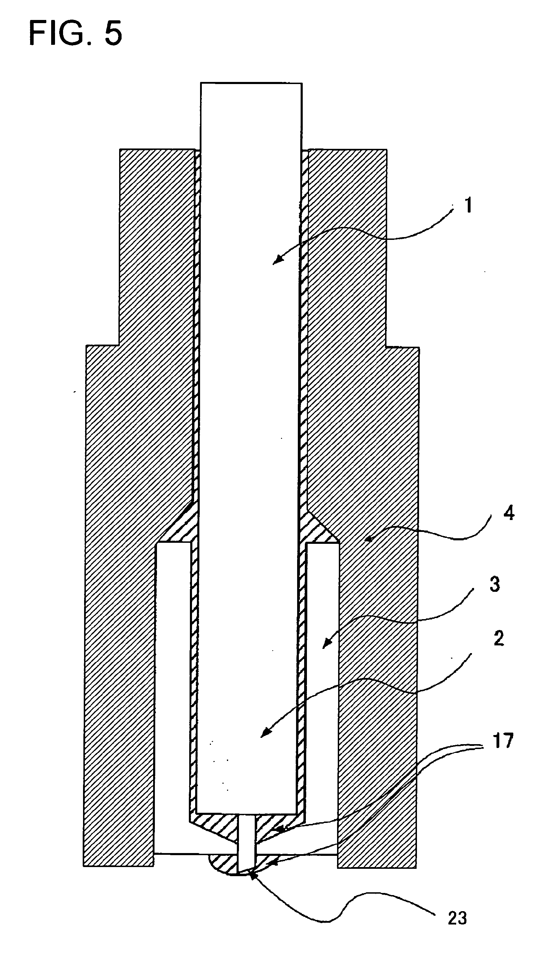

As shown in Fig. 5, the ferrule 4 supporting the optical fiber so that the end of the optical fiber wire 2 protrudes, and the optical fiber wire 2 are jointed by the adhesive 17 having the same refractive index as of the core of the optical fiber wire 2. A core end 23 of the optical fiber wire 2 is coated with the foregoing adhesive. By this construction, even if the adhesive 17 adheres to the end face of the optical fiber wire 2, the signal light emitted from the LD 10 is not scattered in the adhesive 17, and therefore good optical transmitting and receiving becomes enabled. Further, in view of manufacturing, it is not necessary to control whether the adhesive adheres to the core end 23 of the optical fiber or not. Therefore, manufacturing characteristics are also improved.

### <Fifth embodiment>

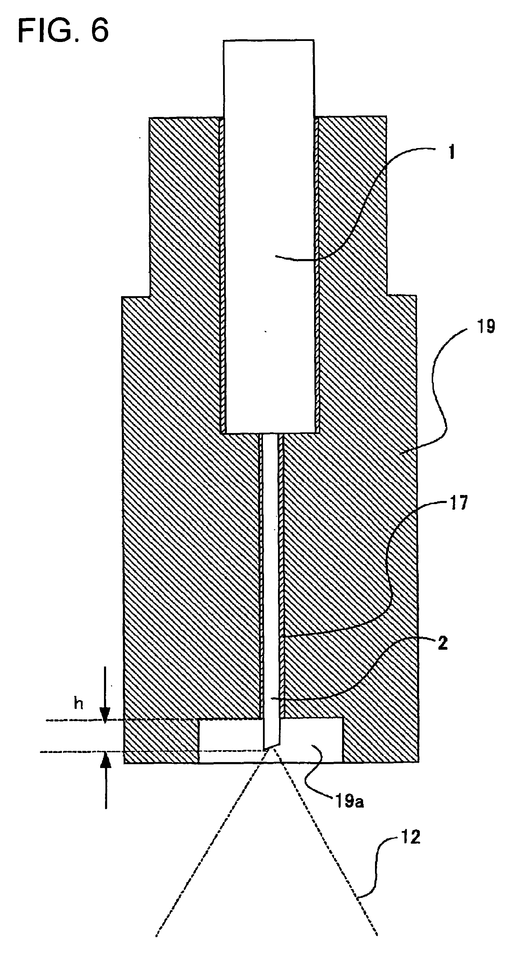

In FIG. 4, the end of the optical fiber wire 2 protrudes from the end face of the metal ferrule 19. Therefore, when the optical module is handled during manufacturing or the like, the end of the optical fiber 1 may be damaged. Therefore, in a fifth embodiment, as shown in FIG. 6, a concave section 19a is formed at the end face of the metal ferrule 19, and the end of the optical fiber wire 2 is adjusted to be accommodated in the concave section 19a. Thereby, the end of the optical fiber 1 is protected, handling easiness is improved, and productivity is improved.

### <Sixth embodiment>

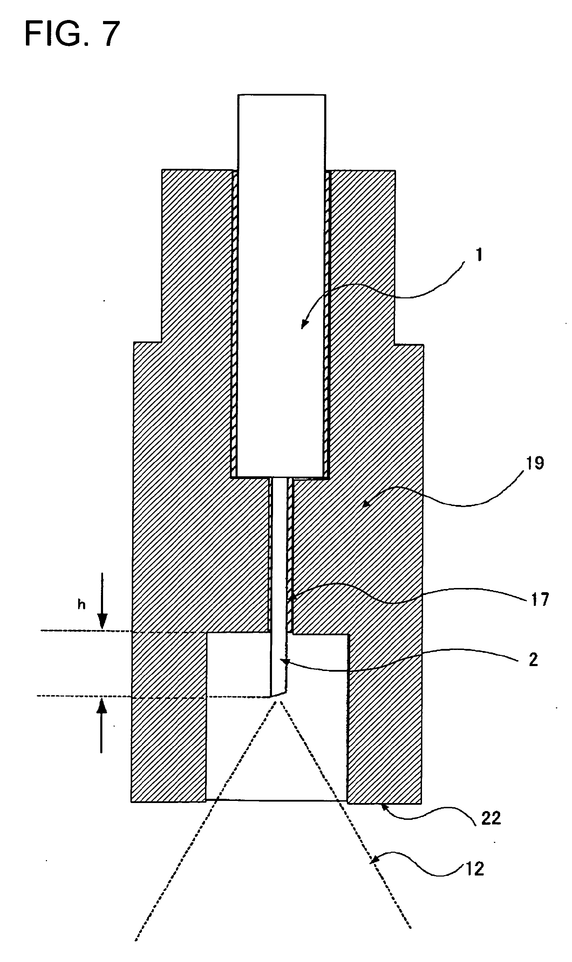

By processing the optical module as shown in FIG. 7 so that the metal ferrule 19 holding the optical fiber wire 2 does not prohibit the light path of the signal light emitted from the LD 10, the coupling efficiency between the signal light 12, which is emitted from the LD 10 (refer to FIG. 1) and condensed by the optical lens 11, and the optical fiber wire 2 is improved, and good optical transmitting and receiving becomes enabled.

The height "h", the protruding amount of the protruding section of the optical fiber is made higher (larger) so that an end face 22 of the foregoing ferrule 19 is not illuminated with the emitted signal light 12 of the light emitting device 10, which enters the optical fiber 2. Thereby, the coupling efficiency between the signal light 12, which is emitted from the light emitting device 10 and condensed by the optical lens 11 and the optical fiber wire 2 is improved, and good optical transmitting and receiving becomes enabled.

### <Seventh and eighth embodiments>

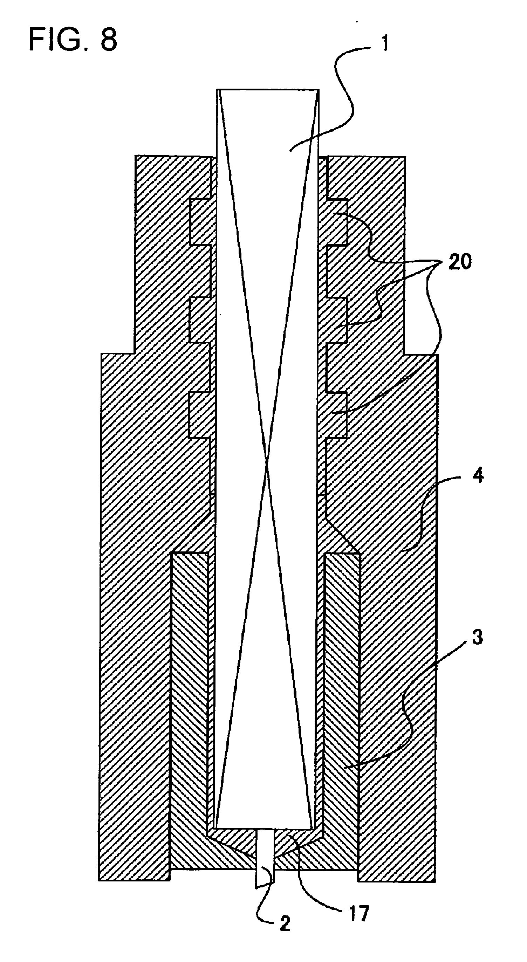

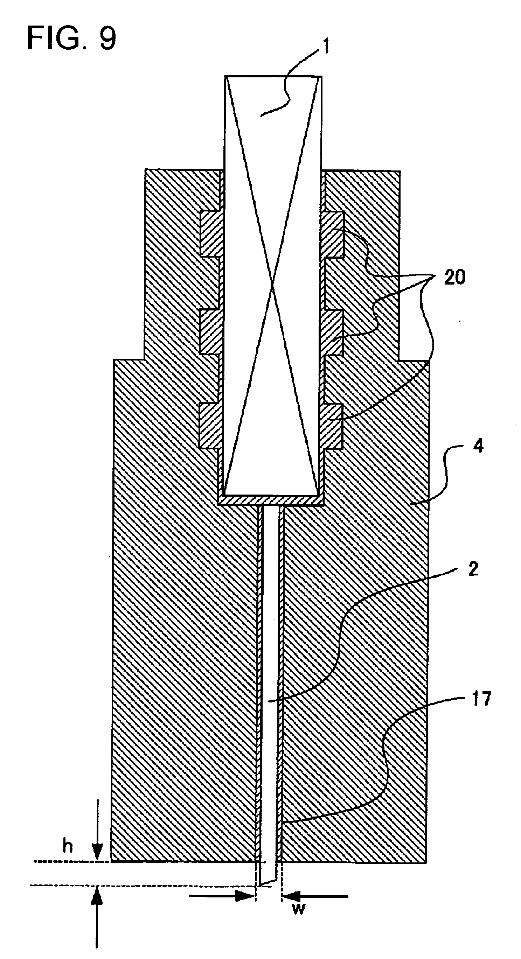

In seventh and eighth embodiments, as shown in FIG. 8 and FIG. 9 respectively, a groove section (step section) 20 capable of containing the adhesive 17 is provided on the side face of the hole to let the optical fiber 1 through the ferrule 4, that is, on the joint face inside the ferrule 4 opposed to the coating of the optical fiber 1. Thereby, it becomes possible to improve joint force between the fiber 1 and the ferrule 4 by the adhesive 17 without using zirconia. In the foregoing embodiments, descriptions have been given of the optical transmitter module. However, the invention can be applied to the optical transmitter and receiver module.

### INDUSTRIAL APPLICABILITY

As described above, according to the invention of claim 1, return light can be prevented. Further, since it is not necessary to polish the ferrule, man hours can be reduced, and a lower-cost optical transmitter and receiver module can be realized. Further, since there is no step of polishing the ferrule, the length of ferrule can be shortened, and therefore downsizing becomes enabled.

According to the invention of claim 2, the transmitted light is condensed by the optical lens, and then coupled by a power necessary for communicating with the optical fiber. Therefore, good optical communication becomes enabled.

According to the invention of claim 3, even if the adhesive adheres to the end face of the optical fiber wire, the signal light emitted from the light emitting device is not scattered by the adhesive. Therefore, good optical communication becomes enabled. Further, in view of manufacturing, it is not necessary to control whether the adhesive adheres to the core end of the optical fiber or not. Therefore, manufacturing characteristics are improved.

According to the invention of claim 4, resistance to temperature change and impact becomes increased, and good optical communication becomes enabled.

According to the invention of claim 5, the end of the optical fiber is protected, handling easiness is improved, and productivity is improved.

According to the invention of claim 6, coupling efficiency between the transmitted light and the optical fiber is improved, and good optical communication becomes enabled.

According to the invention of claim 7, expensive zirconia, which has been always demanded does not have to be used. Therefore, a low-cost optical module can be provided.

According to the invention of claim 8, joint force between the fiber and the ferrule by the adhesive can be improved without using zirconia.

According to the invention of claim 9, the optical module according to any of claims 1 to 8 is used for optical transmitting and receiving. Therefore, an optical transmitter-receiver having advantages shown in the foregoing respective claims can be provided.

## Claims

1. An optical module comprising:
an optical fiber having an end which is diagonally formed in relation to the optical axis and;
a ferrule supporting the optical fiber so that the end of the optical fiber protrudes.

2. The optical module according to claim 1, wherein the optical fiber and the ferrule are jointed by an adhesive, and a core of the optical fiber is exposed at the end face of the optical fiber.

3. An optical module, wherein a ferrule supporting an optical fiber so that an end of the optical fiber protrudes and the optical fiber are jointed by an adhesive having the same refractive index as of a core of the optical fiber, and an end of the core of the optical fiber is coated with the adhesive.

4. The optical module according to claim 1, wherein a length of the optical fiber exposed from the ferrule is in the range from once to fivefold a diameter of the optical fiber.

5. The optical module according to claim 1 or claim 3, wherein a concave section is formed at a fiber holding section of the ferrule, in which the end of the optical fiber protrudes, and a depth of the concave section is larger than a height, a protruding amount of the end of the fiber.

6. The optical module according to claim 5, wherein a light emitting device is provided, and the height, the protruding amount of the protruding section of the optical fiber, is made higher so that an end face of the ferrule is not illuminated with emitted signal light of the light emitting device entering the optical fiber.

7. The optical module according to claim 1 or claim 3, wherein the ferrule consists of a first ferrule supporting at least a wire of the optical fiber and a second ferrule supporting the first ferrule and the optical fiber, the first ferrule is formed from SUS 303, and the second ferrule is formed from SUS 304.

8. The optical module according to claim 1 or claim 3, wherein a groove section capable of containing an adhesive is provided on a joint face inside the ferrule opposed to a coating of the optical fiber.

9. An optical transmitter-receiver using the optical module according to any one of claims 1 to 8 for optical transmitting and receiving.
